(19) Europäisches Patentamt

European Patent Office

Office européen des brevets

(11) Publication number: **0 346 532 B1**

## (12) EUROPEAN PATENT SPECIFICATION

(45) Date of publication of patent specification: **23.02.94**

(51) Int. Cl.5: **C08G 81/00**, C08L 67/00, C09D 167/00

(21) Application number: **88305379.5**

(22) Date of filing: **13.06.88**

The file contains technical information submitted after the application was filed and not included in this specification

(54) **Aqueous dispersion type coating material.**

(43) Date of publication of application:
**20.12.89 Bulletin 89/51**

(45) Publication of the grant of the patent:
**23.02.94 Bulletin 94/08**

(84) Designated Contracting States:
**DE ES GB**

(56) References cited:
**EP-A- 0 066 197**
**GB-A- 2 097 005**
**US-A- 3 565 839**

(73) Proprietor: **NIPPON OIL AND FATS COMPANY, LIMITED**
**10-1, Yuraku-cho 1-chome**
**Chiyoda-ku Tokyo 100(JP)**

(72) Inventor: **Ishidoya, Masahiro**
**No.3654-2, Maiokacho**
**Totsuka-ku**
**Yokohama-shi Kanagawa(JP)**
Inventor: **Soma, Toru**
**No. 473, Shimokuratacho**
**Totsuka-ku**
**Yokohama-shi Kanagawa(JP)**
Inventor: **Ogawa, Hisao**
**No. 19-69 Ikego 2-chome**
**Zushi-shi Kaganawa(JP)**

(74) Representative: **Perry, Robert Edward et al**
**GILL JENNINGS & EVERY**
**Broadgate House**
**7 Eldon Street**
**London EC2M 7LH (GB)**

**Description**

**Background of the Invention**

1. Field of the Invention

The present invention relates to an aqueous dispersion type coating material containing an aqueous dispersion of polyester resin as a film forming constituent, and more particularly relates to an aqueous dispersion type coating material capable of forming a film having a high level of water resisting property and mechanical strength.

2. Description of the Prior Art

In recent years, from the viewpoint of environmental preservation and resource saving, the conversion toward the aqueous coating material using water as diluent from the conventional so-called solvent type coating material which uses an organic solvent as a diluent is being pushed forward. On the other hand, the required performance for for coated film has become higher in level in recent days, and it is the actual situation that even the aqueous coating material is required to have an excellent water resisting property and strength capable of realizing the durability over a long period of time.

The conventional aqueous coating materials can be largely classified into two types, namely, the water soluble type coating material containing the water soluble resin as a binder constituent and the water dispersion type coating material using a water insoluble resin in dispersed state. Out of these types, the waster soluble type coating material, which is the former, needs to contain a great deal of highly hydrophilic carboxyl groups or sulfonic acid groups in the resin and therefore is insufficient in both the water resisting property and mechanical strength of coated film, and the aqueous dispersion type coating material, which is the latter, is mainly studied in recent years.

The aqueous dispersion type coating materials as follows are currently known.

(i) A so-called emulsion type coating material using a dispersing element which can be obtained through emulsification/polymerization method using surfactants and emulsifiers.

(ii) An aqueous dispersion-type coating material (for example, Japanese Patent Application Laid-Open No.212250 /1982) using the so-called self-emulsification aqueous dispersing element which is made emulsifiable in by incorporating sulfonic acid groups and the polyalkylene glycols into the high molecular hydrophobic resin.

(iii) An aqueous dispersion-type coating material (for example, Japanese Patent Application Laid-Open No. 11141 /1979) using the aqueous dispersing element obtainable by the so-called mechanical emulsification method, where a water-soluble resin of low polarity is mixed with hydrophobic resin; the hydrophobic resin is emulsified in water by utilizing the emulsification action of the water-soluble resin as a high molecular weight surfactant.

The emulsion-type coating material (i) has excellent mechanical strength of film by the introduction of high molecular weight resin, but poor water resisting property because of the residue of the strongly hydrophilic surfactant and emulsifier in the coated film. The self-emulsification aqueous dispersion type coating material (ii) has improved water-resisting property and mechanical strength as compared with the conventional water-soluble type coating materials, but the water-resisting property is compromised owing to the unavoidable presence of the highly hydrophilic sulfonic acid groups and polyalkylene glycols. The aqueous dispersion-type coating material (iii) has excellent water-resisting property because a resin of low polarity is used as a binder constituent, without using usual surfactants, but has a limitation in the emulsification of high molecular hydrophobic resin which has a high adhesive force, and therefore cannot always be said to provide sufficient mechanical strength in the coated film.

Conventional aqueous coating materials therefore fail to provide both high water-resistance and high mechanical strength.

An object of the present invention is to provide an aqueous dispersion-type coating material having good water-resistance, mechanical strength, adhesion, finish and storage stability.

EP-A-0066197 describes a water-soluble binder which can be used as a coating material, comprising an alkyd resin having a acid value of 30-200 and a hydroxyl value of 0-200, and a water-insoluble alkyd resin having a hydroxy value of 50-300; the weight ratio of the resins is from 30:70 to 70:30. The condensation product of the resins has an acid value of 25-70.

## Summary of the Invention

An aqueous dispersion-type coating material according to the present invention comprises, as a film-forming constituent, an aqueous dispersion containing a hardening agent and a reaction product obtainable by at least partial condensation of resins A and B in a weight ratio of 90:10 to 20:80, neutralisation of the resultant resin having an acid value of 10 to 30 with 0.2 to 1 equivalents of a base per free carboxyl group of the resin, and aqueous emulsification of the neutralised resin, in which:

resin A is a water-soluble carboxyl group-containing polyester resin having an acid value of 20 to 50, a hydroxyl value of 50 to 200, and a number average molecular weight at 1,000 to 10,000; and

resin B is a hydrophobic linear polyester resin having a softening point of 40 to 200 °C and a number average molecular weight of 10,000 to 100,000, and which is derived from a dicarboxylic acid and a glycolic constituent.

## Description of the Invention

The novel coating material includes a hydrophobic high molecular weight linear polyester resin (hereinafter described as "linear polyester resin") as resin B, which is already known to have good water-resistance and mechanical strength. When the water-soluble polyester resin (resin A) containing carboxyl groups is reacted with the linear polyester resin, the at least partially-condensed, hydrophilic reaction product can be stably emulsified in water, in the presence of base, in the form of particles in the colloidal emulsion range and moreover at a high solids content. The aqueous dispersion can be hardened to form a film, but the presence of a hardening agent provides a film having both good water-resistance and mechanical strength.

The parameters of resin A are average molecular weight at 1,000 to 10,000 and containing carboxyl group.

Resin "B" : A hydrophobic linear polyester resin with softening point at 40 to 200 °C and number average molecular weight at 10,000 to 100,000 which has been synthesized from carboxlylic acid constituent and glycolic constituent.

## Detailed Description of the Invention

The aqueous dispersion type coating material according to this invention introduces into the aqueous coating material the hydrophobic high molecular weight linear polyester resin (hereinafter to be described simply as "Linear polyester resin") of resin "B" which is synthesized from dicarboxylic acid constituent and glycolic constituent and has been known to have excellent water resisting property and mechanical strength from the past. When the water soluble polyester resin (resin "A") containing the carboxyl group in the range of particular polarity is reacted with the aforesaid linear polyester resin, the resin reactant which at least a part of resin has been condensed in ester can be emulsified stably into water under existence of base in the particle size of the collodal emulsion region and moreover in the state of high solid content. The aqueous dispersion type coating material according to this invention contains as a film forming constituent an aqueous dispersion which can be obtained in this way. This aqueous dispersion can singularly be hardened to form a coated film, but the aqueous dispersion type coating material which can be obtained by compounding an adequate hardening agent further into this aqueous dispersion is low in polarity and moreover owns as a binder constituent a high molecular weight resin having a high mechanical strength so that a coated film excellent in water resisting property and mechanical strength is formed.

The resin "A" in this invention contains a carboxyl group and is the water soluble polyester resin with acid value at 20 to 50, hydroxyl value at 50 to 200 and number average molecular weight at 1,000 to 10,000. The resin "A" forms a condensed substance having a hydrophilic property reacted through esterification/transesterification with a part of the hydrophobic resin "B", which emulsifies the resin "B" into water.

Why the resin "A" is limited within the said range is attributable to the following reasons. In the case of acid value of resin "A" being less than 20, the hydrophilic property will be insufficient and after its condensation reaction with the resin "B", the non-reacted resin "B" can not be emulsified under stable dispersion state into the aqueous medium, while in the case of acid value exceeding 50, the emulsification against the resin "B" will be deteriorated and moreover the water resisting property when converted into a coated film falls down which is not favorable.

The hydroxyl value of resin "A" is important as to the solubility in aqueous media and crosslinking points. In the case of hydroxyl value being less than 50, the hydrophilic property becomes insufficient and moreover crosslinking points are too few, with poor water resisting property and strength, while in the case of hydroxyl value exceeding 200, it is unfavorable because the water-resisting property of coated film is adversely influenced. In the case of number average molecular weight of resin "A" being less that 1,000, the water-resisting property and weatherability of the coated film may deteriorate, whereas in the case of number average molecular weight exeeding 10,000, to the contrary, the viscosity after its condensation reaction with the resin "B" becomes too high and is not favorable because not only the fluidity/smoothness of the coated film during heating and drying deteriorates but also the non-volatile matter of the coating material may fall.

The parameters for resin "B" are attributable to the following reasons. In the case of the softening point of resin "B" being lower than 40°C, it will have inferior mechanical strength, while if the softening point exceeds 200°C, the viscosity becomes too high wherein not only the condensation reaction with the resin "A" becomes difficult but also the emulsification of resin reactant becomes more difficult, thus failing to obtain a stable and fine aqueous dispersing element. In the case of the number average molecular weight of resin "B" being less than 10,000, the water-resisting property and mechanical strength are insufficient when the resin has been converted into a coated film and moreover in the case of the said molecular weight exceeding 100,000, the viscosity not only becomes too high and its condensation reaction with the resin "A" becomes difficult, but also causes an unfavorable fall in the non-volatile matter of the coating material.

There is no particular limitation as to the aforesaid resin "A" and resin "B" so long as they have satisfied the conditions described above. A polyester resin which is usually marketed or synthesized by a known technique from conventional polyester raw material may be used.

Out of the polyester raw materials being used in this case, such raw materials, for example, orthophthalic acid, phthalic anhydride, isophthalic acid, terephthalic acid, tetrahydrophthalic anhydride, maleic anhydride, succinic acid, glutaric acid, adipic acid, trimethyl adipic acid, azelaic acid, decamethylenedicarboxylic acid and their alcoholic esters can be enumerated as the dicarboxylic acid constituents. Further, as glycolic constituents, such substances as ethylene glycol, 1,2-propylene glycol, 1,3-propylene glycol, diethylene glycol, triethylene glycol, 1,4-butylene glycol, neopentyl glycol, 1,5-pentylene glycol, 1,6-hexylene glycol, 1,4-cyclohexylene glycol, ethylene oxide or propylene oxide adducts of Bisphenol A can be enumerated.

Further with regard to the resin "A", the polyester raw materials of one function and three or more functions can be used beside the aforesaid polyester raw material of two functions. As the carboxylic acid constituents of the polyester raw materials of one function, such natural fatty acides, as soya-beans oil, coconut oil, safflower oil, cotton seed oil, rice oil, castor oil, castor oil anhydride, hydrogenated castor oil, tung oil, linseed oil, tall oil and the like, and a variety of synthetic fatty acids of C2 through C20 can be enumerated. Also, as the alcoholic constituents, such substances as lauryl alcohol, myristyl alcohol, cetyl alcohol, stearyl alcohol and oleyl alcohol which can be obtained by reducing the aforementioned natural fatty oils, or the synthetic alcohols of C8 through C30, alkyl substituted hydrogenated phenols of C2 through C24 can be enumerated. As the polyester raw materials of three or more functions, such substances as dimethylol propionic acid, trimellitic anhydride, pyromellitic anhydride, butane tetracarboxylic acid and the like as well as glycerin, trimethylol ethane, trimentylol propane, 1,2,6-hexanetriol, trimethylol cyclohexane, pentaerythritol, sorbitol, diglycerol, dipentaerythritol, etc. can be enumerated. Moreover, with regard to the resin "B" too, the raw materials other than the aforesaid polyester raw materials of 2 functions can be used in the range of less than 10 mol % as necessary with respect to all the raw material constituents.

As the resin "B", the commercially available linear polyester resins can be used, for example, Vylon 200 (trade mark, produced by Toyobo Co., Ltd., softening point 163°C, number average molecular weight 20,000), Vylon 500 (trade mark, softening point 114°C, number average molecular weight 25,000), Chemit R188 (trade mark, produced by Toray Co., Ltd., softening point 115°C, number average molecular weight 25,000) and Chemit K1294 (softening point 155°C, number average molecular weight 18,000) and the like can be enumerated.

In the present invention, the aforesaid resin "A" and resin "B" are reacted together with heating within the range from 90 : 10 through 20 : 80 at the weight ratio of A : B, to condense at least a part of these resins through esterification/transesterification into the formation of a resin reactant with acid value at 10 to 30. This reaction adds at least a part of resin "B" which does not get dissolved inherently in water to resin "A" while maintaining the former resin structure so as to provide the hydrophilic property to the latter resin, thereby not only allowing the dispersion of condensed substance into aqueous medium but also permitting the emulsification of non-reacted resin "B" into aqueous medium by dint of its interfacial activity. Moreover, resins "A" and "B" can be used that are poorly compatible; favorable compatibility can be exhibited by the aforementioned condensation/reaction, and as a result, it becomes possible to obtain the coated film having a superior glossiness.

The water-resisting property and mechnical strength of the objective coating material fall down if the proportion of resin "A" exceeds 90 weight % of the total weight of resins "A" and "B" (internal division calculation), while in the case that the proportion of resin "A" is less than 20 weight %, the volume of particle constituents becomes excessive and a smooth finished appearance can not be obtained, thus resulting in an unfavorable effect.

On the other hand, the water solubility is insufficient and fine aqueous dispersion can not be obtained if the acid value of resin-reacted substance obtained by the reaction of resins "A" and "B" should be less than 10, and for that reason, the storage stability becomes worse, while if the acid value should exceed 30, the water resisting property of the coated film falls down and is not favorable.

The end point of the esterification/transesterification of resins "A" and "B is not always constant depending on the kinds of resins being used, but it will be generally at the point of time when the acid value of resin-reacted substance falls under the aforementioned range. Moreover, it is desirable to investigate the solubility of the reactant against water during the reaction process and to determine the end point when an aqueous dispersion of colloidal emulsion region presenting an intensive bluish color in the dissolved state is obtained. In general, there is a tendency that a finer aqueous dispertion can be obtained as the condensation/reaction is continued longer, but if the reaction should be advanced excessively, a drop in non-volatile matter of aqueous dispersion may occur, which is not favorable. The reaction temperature of the condensation/reaction should favorably be maintained within the range from 150 to 200°C in order to facilitate the control of reaction advancement degree.

In the said condensation/reaction, a hydrophilic organic solvent which does not react with resin "A" and resin "B" can be used for the purpose of facilitating the agitation. As the organic solvents in this category the following solvents, for example, can be enumerated: diethylene glycol dimethyl ether, diethylene glycol diethyl ether, triethylene glycol dimethyl ether, triethylene glycol diethyl ether, etc.

The resin reactant of the resins "A" and "B", after neutralization by a base substance, will be emulsified into an aqueous medium to form an aqueous dispersion, and can be used as a film-forming constituent of aqueous dispersion-type coating material. Here, an aqueous medium means water or a solvent in which an organic solvent or other substances have been mixed with water.

The base substance can be any of those which are used in general aqueous coating materials, such as ammonia, triethylamine, dimethylethanolamine, diethylmethanolamine, diethanolamine, methyldiethanolamine, 2-amino-2-methylpropanol, etc. It is desirable that the neutralization ratio of the carboxyl group in resin reactant by the base substances remains within the range of 0.2 to 1 equivalent. If the neutralization ratio is less than 0.2 equivalent, a stable aqueous dispersion cannot be obtained, whereas if the ratio exceeds 1 equivalent, the viscosity of an aqueous dispersion is increased and may cause reduced non-volatile matter contained in the objective coating material.

To obtain the aqueous dispersion from the neutralized resin reactant, the production can be done either by the method of gradually adding water to the resin reactant or the method of adding the resin reactant to water. For the purpose of assisting the emulsification, it is preferable to use the resin-condensed substance and the water which have been heated up in advance. Further for the similar purpose, the organic solvent being used for usual aqueous coating materials can be used at 40 weight % or less with respect to the resin reactant together with the amount which has been used in the said ester condensation/reaction.

The hardening agent useful in this invention is a substance capable of achieving cross-linking in reaction with the resins "A" and "B" as well as with the resin reactant. As a cross-linking agent, one or more compounds selected from amino resins and blocked isocyanates are useful. As amino resins, such substances are available as the condensate of co-condensates of formaldehyde and urea, melamine or benzoguanamine. Further, the etherified substances derived from alcohols of up to 4 C atoms with these condensates can also be used. As the blocked isocyanates, there may be useful such polyisocyanate compounds having two or more isocyanate groups within a molecule blocked with a blocking agent, such as ethylene diisocyanate, propylene diisocyanate, tetraethylene diisocyanate, hexamethylene diisocyanate, decamethylene diisocyanate, m-phenylene diisocyanate, p-phenylene diisocyanate, 2,4-tolylene diisocyanate, 2,6-tolylene diisocyanate, 1,5-naphthyl diisocyanate, 4,4', 4''-triphenylmethane triisocyanate, 4,4'-diphenylmethane diisocyanate, 3,3'-dimethyl-4,4' -diphenyl diisocyanate, m-xylylene diisocyanate, p-xylylene diisocyanate, isophorone diisocyanate, trimethyl-hexamethylene diisocyanate, etc. As the aforesaid blocking agents, such substances are available, for example as phenolic compounds like phenol and cresol, alcohols like methanol, benzyl alcohol and ethylene glycol monoethyl ether, active methylene compounds like acetoacetic acid methyl ester and malonic acid dimethylester, amides like acetanilide and acetamide, imides, amines, imidazoles, ureas, carbamates, imines, oximes, mercaptans, sulfites, lactams, etc.

The hardening agent can be introduced into the aqueous dispersion-type coating material either by mixing it with resins "A" and "B" or resin reactant, by mixing it directly with aqueous dispersion, by dissolving or dispersing it previously into a water-miscible organic solvent or into a mixture of water-miscible organic solvent with water, or by mixing it with coating material in performing a coating operation. These methods may be selected as desired, depending on the kinds of hardening agents.

In the present invention, the weight ratio of the resin reactant and the hardening agent should preferably be within the range from 95 : 5 through 60 : 40. If the proportion of hardening agent should be less than 5 weight % of the total weight of the resin reactant (internal division calculation), cross-linking density will be too low, resulting in low water-resisting property and strength of coated film, whereas if the hardening agent should exceed 40 weight %, cross-linking will be promoted excessively, resulting in the loss in flexibility, which is not favorable.

The aqueous dispersion-type coating material according to the present invention can be produced by a known method, by adding to the dispersion other constituents being added moreover as necessary, for example, other water-soluble resin, hardening agent, surface conditioning agent, etc. after adding the hardening agent according to the technique described above to the aqueous dispersion of resin reactant which could be obtained as per the said description. Further, in the case that a pigmented aqueous dispersion-type coating material is to be produced, such a coating material can be produced by preparing the pigment paste in accordance with a usual method using a part of resin "A" and mixing it with the aqueous dispersion of the resin reactant, or by having the pigment kneaded previously into the resin reactant and producing the aqueous dispersion of pigment-containing resin reactant.

The aqueous dispersion-type coating material which has been produced in the above method can, like the case of conventional aqueous dispersion-type coating materials in general, be applied to an object by such methods as brushing, spraying, immersing and electrostatic coating, to form a film by stoving or baking.

The aqueous dispersion-type coating material according to the present invention, because it contains as a film-forming constituent the resin reactant of the hydrophobic high molecular linear polyester resin which is excellent in water-resisting property and mechanical strength and the low polarity aqueous polyester resin, can form a coated film having high level of water-resisting property and mechanical strengh. In addition, since the aforesaid hydrophobic high molecular weight linear polyester resin is added to the aqueous polyester resin, the reactant can be emulsified into water in a particle size of a colloidal emulsion region and the coated film excellent in adhesion, storage stability, finished appearance and other coated film performances can be obtained.

Description of Preferred Embodiments

Next, examples of the present invention are to be described. In each of the examples, the expressions of "Parts" and "%" stand for the weight parts and weight %, respectively.

Production Example 1 : Production of resin "A1"

30.0 parts of isophthalic acid, 33.5 parts of 1,5-pentylene glycol and 10.0 parts of trimethylol propane were charged into a 4-necked flask equipped with agitator, thermometer, reflux cooler and nitrogen gas-introducing pipe and were heated up to 180°C over one hour. When 180°C had been reached, 0,1 part of esterification catalyst, Fascat No. 4100 (trade mark, manufactured by M & T Chemicals Corporation), was charged into the mixture which was then heated to 220°C for 2.5 hours to achieve the esterification, and thus a reactant with acid value of 10 was obtained. After cooling this reactant down to 180°C, 16.4 parts of adipic acid and 10.0 parts of trimellitic anhydride were added to it and the esterification was conducted at 170 to 190°C for 4 hours, and the water-soluble polyester resin "A1" of acid value 40 and hydroxyl group value 120 and number average molecular weight 1,400 was obtained.

Production Example 2 : Production of Resin "A2"

30.0 parts of isophthalic acid, 31.0 parts of 1,5-pentylene glycol and 11.4 parts of trimethylol propane were charged into a flask similar to that in the Production Example 1, and heated up to 180°C over 1 hour. When 180°C had been reached, 0,1 part of esterification catalyst Fascat No. 4100 was charged into the mixture, heated to 220°C for 2.5 hours for achieving the esterification, and thus a reactant with acid value of 10 was obtained. After cooling the reactant down to 180°C, 17.5 parts of adipic acid and 10.0 parts of trimellitic anhydride were added and the esterification was continued at 170 to 190°C for 3 hours, thus the water-soluble polyester resin "A2" with acid value 60, hydroxyl value 120 and number average molecular weight 1200 was obtained.

Production Example 3 : Production of Resin "B1"

60.0 parts of isophthalic acid, 20.0 parts of 1,5-pentylene glycol and 19.9 parts of neopentyl glycol were charged into a flask similar to that in the Production Example 1 and was heated up to 180°C over 1 hour. When 180°C had been reahed, 0.1 part of esterification catalyst Fascat No. 4100 was charged into the mixture, and after being heated up to 240°C over 6 hours, the esterification was continued further at the same temperature for additional 3 hours, and the hydrophobic linear polyester resin "B1" with acid value 5, softening point 65°C and number average molecular weight 3,800 was obtained.

Example 1

48 parts of aqueous polyester resin "A1" and 32 parts Of hydrophobic linear polyester resin Vylon (already explained in the above) were charged into a flask similar to that in Production Example 1, and the esterification was continued at 180°C for 2 hours and the resin reactant with acid value at 22 where the ratio of resin "A1" and resin "B" (Vylon 200) at 60:40 was obtained. Next, the resin reactant was cooled down to 120°C. There was then added 20 parts of ethylene glycol monobutyl ether, thus the varnish with non-volatile matter at 80% was obtained. Next, the varnish was cooled down to 60°C. There was then added 2.1 parts of dimethylethanolamine corresponding to 0.75 mol equivalent of carboxyl group within the resin reactant while agitating it using Homo disper (manufactured by Tokushu Kika Kogyo Co., Ltd., hereinafter to be quoted in the same manner), for uniform neutralization of the mixture. There was then gradually added 120 parts of deionized water, thus the aqueous dispersion with non-volatile matter at 36% having a intensive bluish colour was obtained.

In the next step, in order to produce a white aqueous dispersing type coating material out of the aqueous dispersion, first of all an aqueous resin solution of water-soluble polyester resin with non-volatile matter at 35 % was obtained which consists of 33.0 parts of water-soluble polyester resin "A1", 8.3 parts of ethylene glycol monobutyl ether, 1.6 parts of dimethylethanolamine and 57.1 parts of deionized water. Then, the mixture of 30.3 parts of the aqueous resin solution, 60.0 parts of titanium dioxide and 9.7 parts of deionized water was dispersed using a sand mill for one hour to prepare a white paste. 44.85 parts of this white paste, 50.90 parts of the aqueous dispersion and 4.00 parts of water-soluble melamine resin (Cymel No.303, trade mark, manufactured by Mitsui Toatsu Chemical Inc., hereinafter to be quoted in the same name) as a hardening agent (cross-linking agent), 0.15 part of para-toluenesuifonic acid and 0.10 parts of additive for aqueous coating materials (Additol XW329, trade mark, manufactured by Hoechst Corporation, hereinafter to be quoted in the same name) were mixed, and thus a white aqueous dispersion-type coating material with non-volatile matter at 53.7% was obtained in which the ratio of pigment portion and resin portion was 1:1, the ratio of water-soluble polyester resin "A1" and hydrophobic linear polyester resin "B" (Vylon 200) was 68:32, and the ratio of the resin (A1 + B) and the melamine resin was 85:15.

Examples 2 and 3

Using Chemit K1294 (described previously) in Example 2 and Polyester SP170 ( trade mark, manufactured by Nihon Gosei Kagaku Kogyo Co., Ltd., softening point 94°C, number average molecular weight 19,000) in Example 3 instead of Vylon 200 which is resin "B" used in Example 1, resin reactants with acid value at 22 were obtained in which the ratio of resin "A" and resin "B" was 60:40 respectively. The resin reactants were cooled down to 120°C. There was added 20 parts of ethylene glycol monobutyl ether, thus varnishes with respective non-volatile matter at 80% were obtained.

Then, a white aqueous dispersion-type coating material was produced in the same manner as that in Example 1. In other words, Vylon 200 in the Example 1 was changed to Chemit K1294 in Example 2 and changed to Polyester SP170 in Example 3, and through the similar compound ratio and control procedures, the white aqueous dispersion type coating material with solid substance at 53.7% was obtained in which the ratio of pigment portion and resin portion was 1:1, the ratio of water-soluble polyester resin "A1" and Chemit K1254 which was a hydrophobic linear polyester resin "B", or Polyester SP170 was 68: 32, and the ratio of the resin (A2 + B) and melamine resin was 85:15.

Comparison Example 1.

Using water soluble polyester resin "A1" which was used in Example 1, a water soluble type coating material not containing Vylon 200 which is a hydrophobic higher molecular weight liner polyester resin was produced in comparison with Example 1.

Namely, mixing 53.12 parts of aqueous resin solution of water-soluble polyester resin "A1", 42.78 parts of white paste both of which were obtained in Example 1, 3.85 parts of water-soluble melamine resin (described earlier), 0.15 part of para-toluenesulfonic acid, and moreover 0.10 part of additive (described earlier) for aqueous coating materials, a water-soluble white coating material with non-volatile matter at 51.3% was obtained in which the ratio of water-soluble polyester resin "A1" and hydrophobic linear polyester resin "B" was 10:0 and the ratio of resin (A1 + B) and melamine resin was 85:15.

Comparison Example 2.

An aqueous dispersion type coating material was produced using the water-soluble polyester resin "A2" higher in acid value as compared with the water-soluble polyester resin "A1" which was used in Example 1, and moreover using the resin reactant with Vylon 200 (resin "B") having an acid value in excess of 30.

In other words, the water-soluble polyester resin "A1" in Example 1 was changed to the water-soluble polyester resin "A2", and the resin reactant with acid value at 34 was obtained with the similar compound ratio and control procedures, then the white aqueous dispersion type coating material with non-volatile matter at 53.7% was obtained in which the ratio of pigment portion and resin portion was 1:1, the ratio of water-soluble polyester resin "A2" and Vylon 200 which was a hydrophobic high molecular weight linear polyester resin "B" was 68:32, and the ratio of resin (A2 + B) and melamine resin was 85:15.

Comparison Example 3.

An aqueous dispersion type coating material was produced using the hydrophobic linear polyester resin "B1" which was lower in molecular weight than Vylon 200 which was resin "B" used in Example 1.

In other words, Vylon 200 in Embodiment 1 was changed to a hydrophobic linear polyester resin "B1" and a resin reactant with acid value at 24 was obtained with the similar compound ratio and control procedures. Then the white aqueous dispersion type coating material with 53.7% solid substance was obtained in which the ratio of pigment portion and resin portion was at 1:1, the ratio of water soluble polyester resin "A1" and hydrophobic linear polyester resin "B1" was 68:32 and the ratio of resin (A1 + B1) and melamine resin was 85:15.

Experiment Example

A cationic electro-deposition coating material (Aqua No. 4200, trade mark, manufactured by Nippon Oil and Fats Co., Ltd.) was electro-deposited onto a cold-rolled steel plate of 0.8 mm thickness treated with zinc phosphate so that the coated film thickness would be 20 $\mu$m in dry state. After baking at 175°C for 25 minutes, diluted coating material of the white aqueous dispersion-type coating material prepared in each of the aforesaid Examples and Comparison Examples diluted with deionized water to adjust the viscosity (at 20°C) to 30 seconds by using Ford cup No.4 was sprayed onto the plate so that the coated film thickness in dry state may become 30 $\mu$m. After setting at 20°C for 10 minutes, the setting was continued at 60°C for additional 5 minutes, then the completed coated film was obtained after baking at 160°C for 30 minutes. Then physical property and water-resisting property tests were conducted on the coated film of the obtained test piece.

A completed coated film of 30 $\mu$m was also obtained on a tin foil through the procedures similar to the aforementioned, then the tin foil was dissolved with mercury to prepare a free film, and the Young's modulus and tensile strength of the obtained coated film were measured by the use of a tensile testing machine. The results are given in the following Table.

| Test items | | Example | | | Comparison Example | | |
|---|---|---|---|---|---|---|---|
| | | 1 | 2 | 3 | 1 | 2 | 3 |
| 60 degree specular glossiness | 1) | 96 | 95 | 97 | 95 | 93 | 90 |
| Pencil hardness | 2) | HB | HB | HB | B | F | HB |
| Adhesive property | 3) | 100/100 | 100/100 | 100/100 | 100/100 | 100/100 | 100/100 |
| Erichsen film distensibility test (mm) | 4) | 9.1 | 9.3 | 9.2 | 7.0 | 9.0 | 8.5 |
| Moisture resistance | 5) | Favorable | Favorable | Favorable | Softening, swelling & bulging | Softening & swelling | Softening & swelling |
| Young's modulus of coated film x $10^{10}$(dyn/cm$^2$) | 6) | 3.60 | 3.58 | 3.50 | 1.25 | 3.40 | 2.10 |
| Breakdown strenght of coated film x $10^5$(g/cm$^2$) | 6) | 5.37 | 5.25 | 4.89 | 2.06 | 4.80 | 2.41 |

EP 0 346 532 B1

(Notes)

1) According to "Article 6.7: 60-degree specular glossiness" set forth in JIS K5400

2) To comply with "Article 6.14: Pencil scratching test" of JIS K5400 and with "Article 8.10: Pencil scratching test method" of JIS D0202. Cut the wooden portion of a pencil (Mitsubishi Uni under trademark manufactured by Mitsubishi Pencil Co., Ltd.), press and abrade its core with an angle of 45 degrees against the coated steel plate surface, and the pencil hardness just before a scar is marked on the coated surface shall be taken as the tested value.

3) To comply with "Article 6.15: Crosscut adhesion test" of JIS K5400 and "Article 8.12: Crosscut adhesion test method" of JIS D0202. 11 parallel lines at 1mm equal space shall be drawn orthogonally to each other onto a test piece using a sharp and thin blade (NT Cutter in trademark) so as to create 100 pieces of square of $1mm^2$, to which a cellophane adhesive tape of 24mm width shall be sticked and shall be pulled upward at once, and if no

squares should be peeled away, the test result shall be recorded as 100/100.

4) By use of Erichsen film distensibility test machine.

5) The appearance of coated film, after it has been left over for 360 hours in a humidity cabinet at temperature of 50°C with humidity at 98%, shall be observed.

6) Machine model of tensile testing machine: Model UTM-III-200 (manufactured by Orienteck Co., Ltd.). Measured temperature: 20°C, Tension speed: 4mm/min.

From the above mentioned results, the coated films that was be obtained from Examples 1 through 3 provide excellent finished appearance (60-degree specular glossiness), coated film physical properties (pencil hardness, adhesion property, Erichsen film distensibility test), water resisting property (moisture resistance) and mechanical strength (Young's modulus and breakdown strength of coated film).

In contrast to this, Comparison Example 1 does not contain any hydrophobic linear polyester resin, so is inferior in water resisting property and mechanical strength. Comparison Example 2 uses a water soluble polyester resin with high acid value and moreover the acid value of resin reactant exceeds the level of 30, so it has an inferior water resisting property. Comparison Example 3 is inferior in water resisting property and mechanical strength since the number average molecular weight uses the hydrophobic linear polyester resin of less than 10,000.

## Claims

### Claims for the following Contracting States : DE, GB

1. An aqueous dispersion-type coating material comprising, as a film-forming constituent, an aqueous dispersion containing a hardening agent and a reaction product obtainable by at least partial condensation of resins A and B in a weight ratio of 90:10 to 20:80, neutralisation of the resultant resin having an acid value of 10 to 30 with 0.2 to 1 equivalents of a base per free carboxyl group of the resin, and aqueous emulsification of the neutralised resin, in which:

   resin A is a water-soluble carboxyl group-containing polyester resin having an acid value of 20 to 50, a hydroxyl value of 50 to 200, and a number average molecular weight at 1,000 to 10,000; and

   resin B is a hydrophobic linear polyester resin having a softening point of 40 to 200°C and a number average molecular weight of 10,000 to 100,000, and which is derived from a dicarboxylic acid and a glycolic constituent.

2. A material according to claim 1, wherein the weight ratio of said reaction product to the hardening agent is 95:5 to 60:40.

3. A material according to claim 1 or claim 2, wherein the hardening agent is selected from amino resins and blocked isocyanates.

EP 0 346 532 B1

**Claims for the following Contracting State : ES**

1. A process for producing an aqueous dispersion-type coating material, comprising formulating as a film-forming constituent thereof, an aqueous dispersion containing a hardening agent and a reaction product obtainable by at least partial condensation of resins A and B in a weight ratio of 90:10 to 20:80, neutralisation of the resultant resin having an acid value of 10 to 30 with 0.2 to 1 equivalents of a base per free carboxyl group of the resin, and aqueous emulsification of the neutralised resin, in which:
   resin A is a water-soluble carboxyl group-containing polyester resin having an acid value of 20 to 50, a hydroxyl value of 50 to 200, and a number average molecular weight at 1,000 to 10,000; and
   resin B is a hydrophobic linear polyester resin having a softening point of 40 to 200°C and a number average molecular weight of 10,000 to 100,000, and which is derived from a dicarboxylic acid and a glycolic constituent.

2. A process according to claim 1, wherein the weight ratio of said reaction product to the hardening agent is 95:5 to 60:40.

3. A process according to claim 1 or claim 2, wherein the hardening agent is selected from amino resins and blocked isocyanates.

**Patentansprüche**
**Patentansprüche für folgende Vertragsstaaten : DE, GB**

1. Wässriges, dispersionsartiges Beschichtungsmaterial, welches umfaßt: als einen Film-bildenden Bestandteil eine wässrige Dispersion, die ein Härtungsmittel und ein Reaktionsprodukt enthält, das durch eine wenigstens teilweise Kondensation der Harze A und B in einem Gewichtsverhältnis von 90:10 bis 20:80, Neutralisieren des erhaltenen Harzes mit einem Säurewert von 10 bis 30 mit 0,2 bis 1 Äquivalent einer Base pro freie Carboxylgruppe des Harzes, und wässrige Emulgierung des neutralisierten Harzes erhältlich ist, in welchem:
   Harz A ein wasserlösliches, Carboxylgruppen-enthaltendes Polyesterharz mit einem Säurewert von 20 bis 50, einem Hydroxylwert von 50 bis 200 und einem Zahlendurchschnitts- Molekulargewicht von 1.000 bis 10.000 ist; und
   Harz B ein hydrophobes, lineares Polyesterharz mit einem Erweichungspunkt bei 40 bis 200°C und mit einem Zahlendurchschnitts-Molekulargewicht von 10.000 bis 100.000 ist, das sich von einer Dicarbonsäure und einem Glykol-Bestandteil ableitet.

2. Material nach Anspruch 1, worin das Gewichtsverhältnis des genannten Reaktionsprodukts zu dem Härtungsmittel 95:5 bis 60:40 beträgt.

3. Material nach Anspruch 1 oder 2, worin das Härtungsmittel ausgewählt wird aus Aminoharzen und geblockten Isocyanaten.

**Patentansprüche für folgenden Vertragsstaat : ES**

1. Verfahren zur Herstellung eines wässrigen, dispersionsartigen Beschichtungsmaterials, welches umfaßt: Formulieren (als einen Film-bildenden Bestandteil) einer wässrigen Dispersion, die ein Härtungsmittel und ein Reaktionsprodukt enthält, das durch eine wenigstens teilweise Kondensation der Harze A und B in einem Gewichtsverhältnis von 90:10 bis 20:80, Neutralisieren des erhaltenen Harzes mit einem Säurewert von 10 bis 30 mit 0,2 bis 1 Äquivalent einer Base pro freie Carboxylgruppe des Harzes, und wässrige Emulgierung des neutralisierten Harzes erhältlich ist, in welchem:
   Harz A ein wasserlösliches, Carboxylgruppen-enthaltendes Polyesterharz mit einem Säurewert von 20 bis 50, einem Hydroxylwert von 50 bis 200 und einem Zahlendurchschnitts- Molekulargewicht von 1.000 bis 10.000 ist; und
   Harz B ein hydrophobes, lineares Polyesterharz mit einem Erweichungspunkt bei 40 bis 200°C und mit einem Zahlendurchschnitts-Molekulargewicht von 10.000 bis 100.000 ist, das sich von einer Dicarbonsäure und einem Glykol-Bestandteil ableitet.

2. Verfahren nach Anspruch 1, worin das Gewichtsverhältnis des genannten Reaktionsprodukts zu dem Härtungsmittel 95:5 bis 60:40 beträgt.

12

**3.** Verfahren nach Anspruch 1 oder 2, worin das Härtungsmittel ausgewählt wird aus Aminoharzen und geblockten Isocyanaten.

**Revendications**

**Revendications pour les Etats contractants suivants : DE, GB**

**1.** Matériau de revêtement du type dispersion aqueuse, comprenant comme constituant filmogène une dispersion aqueuse contenant un agent durcissant et un produit réactionnel qu'il est possible d'obtenir par condensation au moins partielle de résines A et B dans un rapport pondéral de 90:10 à 20:80, neutralisation de la résine obtenue ayant un indice d'acide de 10 à 30 à l'aide de 0,2 à 1 équivalent d'une base par groupement carboxyle libre de la résine, et émulsification aqueuse de la résine neutralisée, dans lequel :

la résine A est une résine polyester hydrosoluble contenant des groupements carboxyle et ayant un indice d'acide compris entre 20 et 50, un indice d'hydroxyle compris entre 50 et 200 et un poids moléculaire moyen en nombre compris entre 1 000 et 10 000 ; et

la résine B est une résine polyester linéaire hydrophobe ayant un point de ramollissement compris entre 40 et 200°C et un poids moléculaire moyen en nombre compris entre 10 000 et 100 000 et est dérivée d'un acide dicarboxylique et d'un constituant glycolique.

**2.** Matériau selon la revendication 1, dans lequel le rapport pondéral dudit produit réactionnel à l'agent durcissant est compris entre 95:5 et 60:40.

**3.** Matériau selon la revendication 1 ou la revendication 2, dans lequel l'agent durcissant est sélectionné parmi des résines aminées et des isocyanates bloqués.

**Revendications pour l'Etat contractant suivant : ES**

**1.** Procédé de production d'un matériau de revêtement du type dispersion aqueuse, comprenant la formulation sous forme de constituant filmogène d'une dispersion aqueuse contenant un agent durcissant et un produit réactionnel qu'il est possible d'obtenir par condensation au moins partielle de résines A et B dans un rapport pondéral de 90:10 à 20:80, neutralisation de la résine obtenue ayant un indice d'acide compris entre 10 et 30 à l'aide de 0,2 à 1 équivalent d'une base par groupement carboxyle libre de la résine, et émulsification aqueuse de la résine neutralisée, dans lequel :

la résine A est une résine polyester hydrosoluble contenant des groupements carboxyle et ayant un indice d'acide compris entre 20 et 50, un indice d'hydroxyle compris entre 50 et 200 et un poids moléculaire moyen en nombre compris entre 1 000 et 10 000; et

la résine B est une résine polyester linéaire hydrophobe ayant un point de ramollissement compris entre 40 et 200°C et un poids moléculaire moyen en nombre compris entre 10 000 et 100 000 et est dérivée d'un acide dicarboxylique et d'un constituant glycolique.

**2.** Procédé selon la revendication 1, dans lequel le rapport pondéral dudit produit réactionnel à l'agent durcissant est compris entre 95:5 et 60:40.

**3.** Procédé selon la revendication 1 ou la revendication 2, dans lequel l'agent durcissant est sélectionné parmi des résines aminées et des isocyanates bloqués.